# EUROPEAN PATENT SPECIFICATION

(11) **EP 3 510 331 B1**
(45) Date of publication and mention of the grant of the patent: **03.06.2020**
(21) Application number: 17765140.3
(22) Date of filing: 06.09.2017
(51) Int. Cl.: F26B 3/04, F26B 3/30, F26B 13/00, F26B 21/04, F26B 23/00

(54) **COMBINED CONVECTION AND RADIATION SYSTEM FOR HEAT TREATMENT OF A CONTINUOUS STRIP**
KOMBINIERTES KONVEKTIONS- UND STRAHLUNGSSYSTEM ZUR WÄRMEBEHANDLUNG EINES KONTINUIERLICHEN STREIFENS
SYSTÈME COMBINÉ DE CONVECTION ET RAYONNEMENT POUR TRAITEMENT THERMIQUE D'UNE BANDE CONTINUE

(30) Priority: 08.09.2016 EP 16290170
(43) Date of publication of application: 17.07.2019
(73) Proprietor: Solaronics S.A., 59280 Armentières (FR)
(72) Inventor: EVEN, Nicolas, 62480 Laventie (FR); FARINHA, James, 59270 Strazeele (FR)
(74) Representative: Cabinet Beau de Loménie
(86) International application number: PCT/EP2017/072281
(87) International publication number: WO 2018/046510

(56) References cited:
- WO-A1-2014/166830
- US-A1- 2008 256 818
- US-B1- 6 311 410
- US-B1- 6 511 015

## Description

### Technical Field

The invention relates to a combined convection and infrared radiation system for heat treatment of continuous strip material such as e.g. paper or paper board.

### Background Art

Coatings on continuous strip material require heat treatment. The heat treatment must often be carried out without contact in order to preserve the quality of the surface state of the strip material or the deposit on it. This applies, for example, to paper strips that have undergone a wet treatment such as the treatment to produce art paper. Systems for the continuous heat treatment of strip material that combine infrared radiation and convective heating are known. Systems exist that comprise gas fired infrared emitters of which the hot gas is sucked by means of suction nozzles and blown back onto the strip by means of blowing nozzles, creating a combined radiation and convective heat treatment system.

US 6,088,930 discloses a convection and radiation system for the heat treatment of a strip which is moving opposite to gas fired infrared radiant elements and elements blowing hot air onto this strip. The system comprises a succession of blowing elements that are separated from each other by at least one gas fired infrared radiant element. Each blowing element comprises on each side a suction element extending near to a gas fired infrared radiant element.

WO2005/085729 discloses a drier installation for drying web. The installation is provided for drying a maximum web width. The installation comprises gas-heated radiant elements for radiating the web, arranged according to at least one row stretching out in the transversal direction over substantially the entire maximum web width. The installation comprises a number of transversal convective systems each equipped with suction and blowing devices for sucking at least part of the combustion products produced by the radiant elements by means of a suction duct and for blowing this part of the combustion products towards the web by means of a blowing duct. Each of the convective system comprises at least an individual mixing device, e.g. a fan, installed opposite of the passing web in relation to corresponding suction and blowing ducts and arranged so as to suck and/or blow the combustion products.

US 6,511,015 discloses a drier installation according to the state of the art.

### Disclosure of Invention

It is an objective of the invention to provide a combined convection and infrared radiation system for heat treatment of continuous strip material that provides higher energy efficiency.

The invention is a drier installation for continuous drying moving strip material according to claim 1. The drier installation comprises a first transverse convective drying system. The first transverse convective drying system comprises first suction nozzles for the suction of hot gas from at the moving strip material into a first suction duct; and one or more than one first blowing nozzles for blowing at least part of the sucked hot gas from a first blowing duct back onto the moving strip material. A first fan is provided in gas flow connection between the first suction duct and the first blowing duct for sucking hot gas by the first suction nozzles and for blowing the hot gas by the one or more than one first blowing nozzles. Preferably, the first transverse convective drying system comprises the first fan.

The drier installation comprises a second transverse convective drying system in downstream movement direction of the strip material from the first transverse convective drying system. The second transverse convective drying system comprises second suction nozzles for the suction of hot gas from at the moving strip material into a second suction duct; and one or more than one second blowing nozzles for blowing at least part of the sucked hot gas from a second blowing duct back onto the moving strip material. A second fan is provided in gas flow connection between the second suction duct and the second blowing duct for sucking hot gas by the second suction nozzles and for blowing the hot gas by the one or more than one second blowing nozzles. Preferably, the second transverse convective drying system comprises the second fan.

The drier installation further comprises at least one transverse row of gas fired radiation emitters installed in the drier installation along the line of movement of the strip material between the first and the second transverse convective drying system.

Ducting is provided connecting the second transverse convective drying system to the first transverse convective drying system to enable part of the hot gas to flow from the second suction duct to the first blowing duct in order to be blown by the first blowing nozzles onto the moving strip material.

With "second transverse convective drying system" is not necessarily meant the second in counting, other transverse convective drying systems could be provided along the line of movement of the strip material between the first transverse convective drying system and the second transverse convective drying system. With "first transverse convective drying system" and "second convective drying system" are meant different transverse convective drying systems in the drier installation for continuous drying moving strip material.

In drier installations for continuous drying moving strip material that have a number of transverse convective drying systems with in between consecutive transverse convective drying systems gas fired radiant emitters, hot gas generated by the gas fired infrared emitters is sucked in the transverse convective drying systems and blown back onto the moving strip material. It has been noticed that the efficiency of drying in a first transverse convective drying system is lower than the efficiency of drying of a downstream transverse convective drying systems. Drier installations according to the invention have not only shown an improved efficiency of the first transverse convective drying system, but also of the overall efficiency of the drier installation. It is believed that the increased efficiency of the first transverse convective drying system is thanks to the use of higher temperatures of the hot gas being blown in the convective system.

Preferably, the first transverse convective drying system is the first transverse convective drying system encountered by the moving strip material after it has entered the drier installation. Even more preferred is when the second transverse convective drying system is located at the same side of the moving strip material as the first transverse convective drying system and when it is the second transverse convective drying system after the moving strip has entered in the drier installation.

Preferably, the ducting is provided with a damper to set the flow rate through the ducting. Preferably the damper can be controlled. The dampers can be manually controllable or the dampers can be motorized. Furthermore, the dampers can comprise section restrictions (punctual or not punctual), fixed plates (flat or not flat), inclined plates. When plates are used as section restrictions the plates can comprise perforations or they can be provided without perforations.

Preferably, the first suction nozzles are - along the line of movement of the strip material - installed downstream of the first blowing nozzles; and the second suction nozzles are - along the line of movement of the strip material - installed upstream of the second blowing nozzles.

According to the invention, the first transverse convective drying system comprises a first extraction duct with suction nozzles for sucking hot air from at the strip material. The first extraction duct is provided for the evacuation out of the drier installation of the sucked hot air via a central fan of the drier installation. The second transverse convective drying system comprises - in moving strip direction downstream from the second blowing nozzles - a second extraction duct with suction nozzles for sucking hot air from at the strip material. The second extraction duct is provided for the evacuation out of the drier installation of the sucked hot air via the central fan of the drier installation.

Preferably, the first extraction duct is provided along the line of movement of the strip material upstream from the first blowing nozzles.

According to the invention, the drier installation comprises a third transverse convective drying system in downstream movement direction of the strip material from the second transverse convective drying system. The third transverse convective drying system comprises third suction nozzles for the suction of hot gas from at the moving strip material into a third suction duct; and third blowing nozzles for blowing at least part of the sucked hot gas from a third blowing duct back onto the moving strip material. A third fan is provided in gas flow connection between the third suction duct and the third blowing duct for sucking hot gas by the third suction nozzles and for blowing the hot gas by the third blowing nozzles. Preferably, the third transverse convective drying system comprises the third fan. According to the invention, the third suction nozzles are - along the line of movement of the strip material - installed upstream of the third blowing nozzles. At least one transverse row of gas fired radiation emitters is installed along the line of movement of the strip material between the second and the third transverse convective drying system. Second ducting is provided connecting the third transverse convective drying system to the first transverse convective drying system to enable part of the hot gas to flow from the third suction duct to the first flowing duct in order to be blown by the first blowing nozzles onto the moving strip material.

Preferably, the first transverse convective drying system is the first transverse convective drying system encountered by the moving strip material after it has entered the drier installation; and the second transverse convective drying system is located at the same side of the moving strip material as the first transverse convective drying system and it is the second transverse convective drying system after the moving strip has entered in the drier installation; and the third transverse convective drying system is located at the same side of the moving strip material as the first transverse convective drying system and it is the third transverse convective drying system after the moving strip has entered in the drier installation.

Preferably, the second ducting is provided with a damper to set the flow rate through the second ducting; preferably the damper can be controlled. The dampers can be manually controllable or the dampers can be motorized. Furthermore, the dampers can comprise section restrictions (punctual or not punctual), fixed plates (flat or not flat), inclined plates. When plates are used as section restrictions they can comprise perforations or they can be provided without perforations.

According to the invention, the drier installation comprising a third transverse convective drying system; the third transverse convective drying system comprises - downstream from the third blowing nozzles - an extraction duct with suction nozzles for sucking hot air from at the strip material. The extraction duct is provided for the evacuation out of the drier installation of the sucked hot air via the central fan of the drier installation.

### Brief Description of Figures in the Drawings

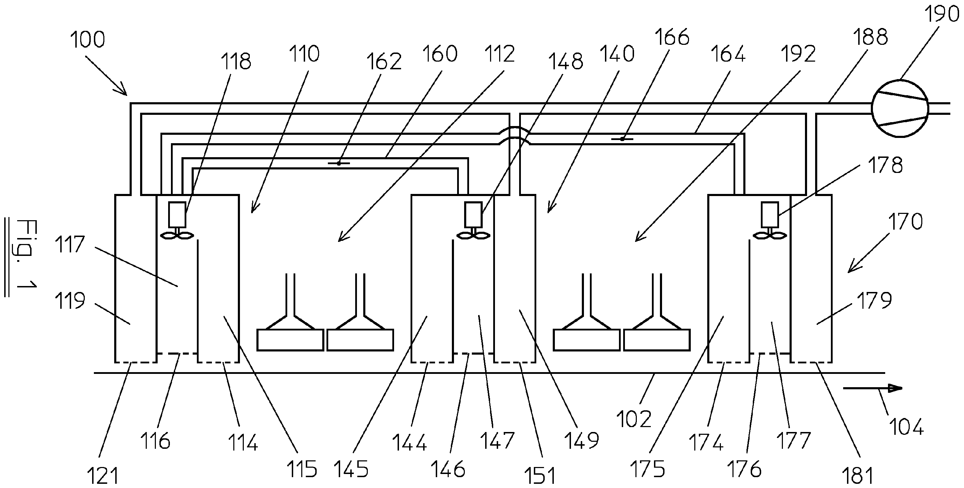

Figure 1 shows a drier installation according to the invention.

### Mode(s) for Carrying Out the Invention

Figure 1 shows a drier installation 100 for continuous drying moving strip material 102 according to the invention. The strip material 102 moves in the direction indicated by arrow 104 through the drier installation. The exemplary drier installation 100 comprises a first transverse convective drying system 110, a second transverse convective drying system 140 in downstream movement direction of the strip material from the first transverse convective drying system; and transverse rows 112 of gas fired radiation emitters installed along the line of movement of the strip material between the first and the second transverse convective drying system.

The first transverse convective drying system 110 comprises first suction nozzles 114 for the suction of hot gas from at the moving strip material into a first suction duct 115; and one or more than one first blowing nozzles 116 for blowing at least part of the sucked hot gas from a first blowing duct back 117 onto the moving strip material. A first fan 118 is provided in gas flow connection between the first suction duct and the first blowing duct for sucking hot gas by the first suction nozzles and for blowing the hot gas by the one or more than one first blowing nozzles. The first transverse convective drying system 110 also comprises a first extraction duct 119 with suction nozzles 121 for sucking hot air from at the strip material 102. The first extraction duct 119 is provided for the evacuation out of the drier installation of the sucked hot air via a central fan 190 of the drier installation and appropriate ducting 188. In the exemplary drier installation 100 the first extraction duct 119 is provided along the line of movement of the strip material 102 upstream from the first blowing nozzles 116.

The second transverse convective drying system 140 comprises second suction nozzles 144 for the suction of hot gas from at the moving strip material into a second suction duct 145; and one or more than one second blowing nozzles 146 for blowing at least part of the sucked hot gas from a second blowing duct back 146 onto the moving strip material. A second fan 148 is provided in gas flow connection between the second suction duct and the second blowing duct for sucking hot gas by the second suction nozzles and for blowing the hot gas by the one or more than one second blowing nozzles. The second transverse convective drying system 140 comprises - in moving strip direction downstream from the second blowing nozzles 147 - a second extraction duct 149 with suction nozzles 151 for sucking hot air from at the strip material 102. The second extraction duct 149 is provided for the evacuation out of the drier installation of the sucked hot air via the central fan of the drier installation 190 and appropriate ducting 188.

In the exemplary drier installation 100, the first suction nozzles 114 are - along the line of movement of the strip material - installed downstream of the first blowing nozzles 116. The second suction nozzles 144 are - along the line of movement of the strip material - installed upstream of the second blowing nozzles 146.

Ducting 160 is provided in the drier installation 100 connecting the second transverse convective drying system 140 to the first transverse convective drying system 110 to enable part of the hot gas to flow from the second suction duct 145 to the first blowing duct 117 in order to be blown by the first blowing nozzles 116 onto the moving strip material 102. The ducting 160 can be provided with a damper 162 to set the flow rate through the ducting; the damper can be a controllable damper.

The drier installation 100 comprises a third transverse convective drying system 170 in downstream movement direction of the strip material 102 from the second transverse convective drying system 140. The third transverse convective drying system 170 comprises third suction nozzles 174 for the suction of hot gas from at the moving strip material into a third suction duct 175; and third blowing nozzles 176 for blowing at least part of the sucked hot gas from a third blowing duct back 177 onto the moving strip material 102. A third fan 178 is provided in gas flow connection between the third suction duct 175 and the third blowing duct 177 for sucking hot gas by the third suction nozzles 174 and for blowing the hot gas by the third blowing nozzles 176. The third suction nozzles 174 are - along the line of movement of the strip material - installed upstream of the third blowing nozzles 176. Rows of gas fired radiation emitters 192 are installed along the line of movement of the strip material 102 between the second and the third transverse convective drying system. Second ducting 164 is provided connecting the third transverse convective drying system 170 to the first transverse convective drying system 110 to enable part of the hot gas to flow from the third suction duct 175 to the first flowing duct 117 in order to be blown by the first blowing nozzles 116 onto the moving strip material 102. The second ducting 164 can be provided with a damper 166 to set the flow rate through the second ducting 164; the damper 166 can be a controllable damper.

The third transverse convective drying system 170 comprises - downstream from the third blowing nozzles 176 - an extraction duct 179 with suction nozzles 181 for sucking hot air from at the strip material 102. The extraction duct 179 is provided for the evacuation out of the drier installation of the sucked hot air via the central fan 190 of the drier installation.

## Claims

1. A drier installation (100) for continuous drying moving strip material (102); comprising
- a first transverse convective drying system (110), comprising first suction nozzles (114) for the suction of hot gas from at the moving strip material (102) into a first suction duct (115); and one or more than one first blowing nozzles (116) for blowing at least part of the sucked hot gas from a first blowing duct (117) back onto the moving strip material (102); wherein a first fan (118) is provided in gas flow connection between the first suction duct (115) and the first blowing duct (117) for sucking hot gas by the first suction nozzles (114) and for blowing the hot gas by the one or more than one first blowing nozzles (116);
wherein the first transverse convective drying system (110) comprises a first extraction duct (119) with suction nozzles (121) for sucking hot air from at the strip material; wherein the first extraction duct (119) is provided for the evacuation out of the drier installation (100) of the sucked hot air via a central fan of the drier installation;
- a second transverse convective drying system (140) in downstream movement direction of the strip material (102) from the first transverse convective drying system (110);
wherein the second transverse convective drying system (140) comprises second suction nozzles (144) for the suction of hot gas from at the moving strip material into a second suction duct (145); and one or more than one second blowing nozzles (146) for blowing at least part of the sucked hot gas from a second blowing duct back onto the moving strip material; wherein a second fan (148) is provided in gas flow connection between the second suction duct (145) and the second blowing duct for sucking hot gas by the second suction nozzles (144) and for blowing the hot gas by the one or more than one second blowing nozzles (146);
wherein the second transverse convective drying system (140) comprises - in moving strip direction downstream from the second blowing nozzles (146) - a second extraction duct (149) with suction nozzles (151) for sucking hot air from at the strip material; wherein the second extraction duct (149) is provided for the evacuation out of the drier installation (100) of the sucked hot air via the central fan of the drier installation,
- at least one transverse row of gas fired radiation emitters (112) installed along the line of movement of the strip material (102) between the first and the second transverse convective drying system;
wherein ducting (160) is provided connecting the second transverse convective drying system (140) to the first transverse convective drying system (110) to enable part of the hot gas to flow from the second suction duct (145) to the first blowing duct (117) in order to be blown by the first blowing nozzles (116) onto the moving strip material
- a third transverse convective drying system (170) in downstream movement direction of the strip material from the second transverse convective drying system (140); the third transverse convective drying system (170) comprises third suction nozzles (174) for the suction of hot gas from at the moving strip material into a third suction duct (175); and third blowing nozzles (176) for blowing at least part of the sucked hot gas from a third blowing duct (177) back onto the moving strip material; wherein a third fan (178) is provided in gas flow connection between the third suction duct (175) and the third blowing duct (177) for sucking hot gas by the third suction nozzles (174) and for blowing the hot gas by the third blowing nozzles (176);
wherein the third suction nozzles (174) are - along the line of movement of the strip material - installed upstream of the third blowing nozzles (176)
wherein the third transverse convective drying system (170) comprises - downstream from the third blowing nozzles (176) - an extraction duct (179) with suction nozzles (181) for sucking hot air from at the strip material; wherein the extraction duct (179) is provided for the evacuation out of the drier installation (100) of the sucked hot air via the central fan of the drier installation; and
- at least one transverse row of gas fired radiation emitters (192) installed along the line of movement of the strip material between the second and the third transverse convective drying system;
wherein second ducting (164) is provided connecting the third transverse convective drying system (170) to the first transverse convective drying system (110) to enable part of the hot gas to flow from the third suction duct (175) to the first blowing duct (117) in order to be blown by the first blowing nozzles (116) onto the moving strip material.

2. A drier installation (100) as in claim 1; wherein the first suction nozzles (114) are - along the line of movement of the strip material (102) - installed downstream of the first blowing nozzles (116); and wherein the second suction nozzles (144) are - along the line of movement of the strip material (102) - installed upstream of the second blowing nozzles (146).

3. A drier installation (100) as in claim 1 or 2; wherein the first extraction duct (119) is provided along the line of movement of the strip material (102) upstream from the first blowing nozzles (116).

4. A drier installation (100) as in any of the preceding claims, wherein the ducting (160, 164) is provided with a damper (162, 166) to set the flow rate through the ducting (160, 164); preferably the damper (162, 166) can be controlled.

## Patentansprüche

1. Trockenanlage (100) zum kontinuierlichen Trocknen eines sich bewegenden Streifenmaterials (102), umfassend
- ein erstes transversales konvektives Trocknungssystem (110), umfassend erste Ansaugdüsen (114) zum Ansaugen von heißem Gas aus dem sich bewegenden Streifenmaterial (102) in eine erste Ansaugleitung (115), und eine oder mehr als eine erste Blasdüse(n) (116) zum Blasen mindestens eines Teils des gesaugten heißen Gases aus einer ersten Blasleitung (117) zurück auf das sich bewegende Streifenmaterial (102), wobei ein erster Ventilator (118) in Gasflussverbindung zwischen der ersten Ansaugleitung (115) und der ersten Blasleitung (117) vorgesehen ist, um heißes Gas durch die ersten Ansaugdüsen (114) zu saugen und das heiße Gas durch die eine oder mehr als eine erste Blasdüse(n) (116) zu blasen,
wobei das erste transversale konvektive Trocknungssystem (110) eine erste Entnahmeleitung (119) mit Ansaugdüsen (121) zum Saugen von heißer Luft von nahe dem Streifenmaterial umfasst, wobei die erste Entnahmeleitung (119) zum Abtransport der gesaugten heißen Luft aus der Trockenanlage (100) über einen zentralen Ventilator der Trockenanlage vorgesehen ist,
- ein zweites transversales konvektives Trocknungssystem (140), in Bewegungsrichtung des Streifenmaterials (102) stromabwärts des ersten transversalen konvektiven Trocknungssystems (110),
wobei das zweite transversale konvektive Trocknungssystem (140) zweite Ansaugdüsen (144) zum Ansaugen von heißem Gas aus dem sich bewegenden Streifenmaterial in eine zweite Ansaugleitung (145), und eine oder mehr als eine zweite Blasdüse(n) (146) zum Blasen mindestens eines Teils des gesaugten heißen Gases aus einer zweiten Blasleitung zurück auf das sich bewegende Streifenmaterial umfasst, wobei ein zweiter Ventilator (148) in Gasflussverbindung zwischen der zweiten Ansaugleitung (145) und der zweiten Blasleitung vorgesehen ist, um heißes Gas durch die zweiten Ansaugdüsen (144) zu saugen und das heiße Gas durch die eine oder mehr als eine zweite Blasdüse(n) (146) zu blasen,
wobei das zweite transversale konvektive Trocknungssystem (140) in Bewegungsrichtung des Streifens stromabwärts der zweiten Blasdüsen (146) eine zweite Entnahmeleitung (149) mit Ansaugdüsen (151) zum Saugen von heißer Luft von nahe dem Streifenmaterial umfasst, wobei die zweite Entnahmeleitung (149) zum Abtransport der gesaugten heißen Luft aus der Trockenanlage (100) über den zentralen Ventilator der Trockenanlage vorgesehen ist,
- mindestens eine transversale Reihe von gasbeheizten Wärmestrahlern (112), die entlang der Bewegungslinie des Streifenmaterials (102) zwischen dem ersten und dem zweiten transversalen konvektiven Trocknungssystem installiert sind,
wobei ein Leitungssystem (160) vorgesehen ist, das das zweite transversale konvektive Trocknungssystem (140) mit dem ersten transversalen konvektiven Trocknungssystem (110) verbindet, um den Fluss eines Teils des heißen Gases von der zweiten Ansaugleitung (145) zur ersten Blasleitung (117) zu ermöglichen, damit es durch die ersten Blasdüsen (116) auf das sich bewegende Streifenmaterial geblasen wird
- ein drittes transversales konvektives Trocknungssystem (170) in Bewegungsrichtung des Streifenmaterials stromabwärts des zweiten transversalen konvektiven Trocknungssystems (140), wobei das dritte transversale konvektive Trocknungssystem (170) dritte Ansaugdüsen (174) zum Ansaugen von heißem Gas von nahe dem sich bewegenden Streifenmaterial in eine dritte Ansaugleitung (175), und dritte Blasdüsen (176) zum Blasen von mindestens einem Teil des gesaugten heißen Gases aus einer dritten Blasleitung (177) zurück auf das sich bewegende Streifenmaterial umfasst, wobei ein dritter Ventilator (178) in Gasflussverbindung zwischen der dritten Ansaugleitung (175) und der dritten Blasleitung (177) vorgesehen ist, um heißes Gas durch die dritten Ansaugdüsen (174) zu saugen und das heiße Gas durch die dritten Blasdüsen (176) zu blasen,
wobei die dritten Ansaugdüsen (174) entlang der Bewegungslinie des Streifenmaterials stromaufwärts der dritten Blasdüsen (176) installiert sind,
wobei das dritte transversale konvektive Trocknungssystem (170) stromabwärts der dritten Blasdüsen (176) eine Entnahmeleitung (179) mit Ansaugdüsen (181) zum Saugen von heißer Luft von nahe dem Streifenmaterial umfasst, wobei die Entnahmeleitung (179) zum Abtransport der gesaugten heißen Luft aus der Trockenanlage (100) über den zentralen Ventilator der Trockenanlage vorgesehen ist, und
- mindestens eine transversale Reihe von gasbeheizten Wärmestrahlern (192), die entlang der Bewegungslinie des Streifenmaterials zwischen dem zweiten und dem dritten transversalen konvektiven Trocknungssystem installiert sind,
wobei ein zweites Leitungssystem (164) vorgesehen ist, das das dritte transversale konvektive Trocknungssystem (170) mit dem ersten transversalen konvektiven Trocknungssystem (110) verbindet, um den Fluss eines Teils des heißen Gases von der dritten Ansaugleitung (175) zur ersten Blasleitung (117) zu ermöglichen, damit es durch die ersten Blasdüsen (116) auf das sich bewegende Streifenmaterial geblasen wird.

2. Trockenanlage (100) nach Anspruch 1, wobei die ersten Ansaugdüsen (114) entlang der Bewegungslinie des Streifenmaterials (102) stromabwärts der ersten Blasdüsen (116) installiert sind, und wobei die zweiten Ansaugdüsen (144) entlang der Bewegungslinie des Streifenmaterials (102) stromaufwärts der zweiten Blasdüsen (146) installiert sind.

3. Trockenanlage (100) nach Anspruch 1 oder 2, wobei die erste Entnahmeleitung (119) entlang der Bewegungslinie des Streifenmaterials (102) stromaufwärts der ersten Blasdüsen (116) vorgesehen ist.

4. Trockenanlage (100) nach einem der vorhergehenden Ansprüche, wobei das Leitungssystem (160, 164) mit einem Dämpfer (162, 166) versehen ist, um die Flussrate durch das Leitungssystem (160, 164) einzustellen, wobei der Dämpfer (162, 166) vorzugsweise gesteuert werden kann.

## Revendications

1. Installation de séchage (100) destinée au séchage en continu d'un matériau en bande (102) mobile ; comprenant
- un premier système de séchage par convection transversal (110), comprenant des premières buses d'aspiration (114) pour l'aspiration d'un gaz chaud, à partir du matériau en bande (102) mobile, dans une première conduite d'aspiration (115) ; et une ou plusieurs premières buses de soufflage (116) pour souffler au moins une partie du gaz chaud aspiré, à partir d'une première conduite de soufflage (117), sur le matériau en bande (102) mobile ; dans laquelle un premier ventilateur (118) est prévu en connexion d'écoulement de gaz entre la première conduite d'aspiration (115) et la première conduite de soufflage (117) pour aspirer un gaz chaud par les premières buses d'aspiration (114) et pour souffler le gaz chaud par les une ou plusieurs premières buses de soufflage (116) ;
dans laquelle le premier système de séchage par convection transversal (110) comprend une première conduite d'extraction (119) avec des buses d'aspiration (121) pour aspirer de l'air chaud à partir du matériau en bande ; dans laquelle la première conduite d'extraction (119) est prévue pour l'évacuation hors de l'installation de séchage (100) de l'air chaud aspiré via un ventilateur central de l'installation de séchage ;
- un deuxième système de séchage par convection transversal (140) en aval, dans une direction de déplacement du matériau en bande (102), du premier système de séchage par convection transversal (110) ;
dans laquelle le deuxième système de séchage par convection transversal (140) comprend des deuxièmes buses d'aspiration (144) pour l'aspiration d'un gaz chaud, à partir du matériau en bande mobile, dans une deuxième conduite d'aspiration (145) ; et une ou plusieurs deuxièmes buses de soufflage (146) pour souffler au moins une partie du gaz chaud aspiré, à partir d'une deuxième conduite de soufflage, sur le matériau en bande mobile ; dans laquelle un deuxième ventilateur (148) est prévu en connexion d'écoulement de gaz entre la deuxième conduite d'aspiration (145) et la deuxième conduite de soufflage pour aspirer un gaz chaud par les deuxièmes buses d'aspiration (144) et pour souffler le gaz chaud par les une ou plusieurs deuxièmes buses de soufflage (146) ;
dans laquelle le deuxième système de séchage par convection transversal (140) comprend - en aval, dans la direction de déplacement du matériau en bande mobile, des deuxièmes buses de soufflage (146) - une deuxième conduite d'extraction (149) avec des buses d'aspiration (151) pour aspirer de l'air chaud à partir du matériau en bande ; dans laquelle la deuxième conduite d'extraction (149) est prévue pour l'évacuation hors de l'installation de séchage (100) de l'air chaud aspiré via le ventilateur central de l'installation de séchage,
- au moins une rangée transversale d'émetteurs de rayonnement alimentés au gaz (112) installés le long de la ligne de déplacement du matériau en bande (102) entre le premier et le deuxième système de séchage par convection transversal ;
dans laquelle un conduit (160) est prévu de manière à relier le deuxième système de séchage par convection transversal (140) au premier système de séchage par convection transversal (110) pour permettre à une partie du gaz chaud de s'écouler, de la deuxième conduite d'aspiration (145) à la première conduite de soufflage (117) afin d'être soufflé par les premières buses de soufflage (116) sur le matériau en bande mobile
- un troisième système de séchage par convection transversal (170), en aval, dans une direction de déplacement du matériau en bande, du deuxième système de séchage par convection transversal (140) ; le troisième système de séchage par convection transversal (170) comprend des troisième buses d'aspiration (174) pour l'aspiration d'un gaz chaud, à partir du matériau en bande mobile, dans une troisième conduite d'aspiration (175) ; et des troisièmes buses de soufflage (176) pour souffler au moins une partie du gaz chaud aspiré, à partir d'une troisième conduite de soufflage (177), sur le matériau en bande mobile ; dans laquelle un troisième ventilateur (178) est prévu en connexion d'écoulement de gaz entre la troisième conduite d'aspiration (175) et la troisième conduite de soufflage (177) pour aspirer un gaz chaud par les troisièmes buses d'aspiration (174) et pour souffler le gaz chaud par les troisièmes buses de soufflage (176) ;
dans laquelle les troisièmes buses d'aspiration (174) sont - le long de la ligne d'un déplacement du matériau en bande - installées en amont des troisièmes buses de soufflage (176)
dans laquelle le troisième système de séchage par convection transversal (170) comprend - en aval des troisièmes buses de soufflage (176) - une conduite d'extraction (179) avec des buses d'aspiration (181) pour aspirer de l'air chaud à partir du matériau en bande ; dans laquelle la conduite d'extraction (179) est prévue pour l'évacuation hors de l'installation de séchage (100) de l'air chaud aspiré via le ventilateur central de l'installation de séchage ; et
- au moins une rangée transversale d'émetteurs de rayonnement alimentés au gaz (192) installés le long de la ligne d'un déplacement du matériau en bande entre le deuxième et le troisième système de séchage par convection transversal ;
dans laquelle un deuxième conduit (164) est prévu de manière à relier le troisième système de séchage par convection transversal (170) au premier système de séchage par convection transversal (110) pour permettre à une partie du gaz chaud de s'écouler, de la troisième conduite d'aspiration (175) à la première conduite de soufflage (117), afin d'être soufflé par les premières buses de soufflage (116) sur le matériau en bande mobile.

2. Installation de séchage (100) selon la revendication 1 ; dans laquelle les premières buses d'aspiration (114) sont - le long de la ligne de déplacement du matériau en bande (102) - installées en aval des premières buses de soufflage (116) ; et dans laquelle les deuxièmes buses d'aspiration (144) sont - le long de la ligne de déplacement du matériau en bande (102) - installées en amont des deuxièmes buses de soufflage (146).

3. Installation de séchage (100) selon la revendication 1 ou 2 ; dans laquelle la première conduite d'extraction (119) est prévue le long de la ligne de déplacement du matériau en bande (102) en amont des premières buses de soufflage (116).

4. Installation de séchage (100) selon l'une des revendications précédentes, dans laquelle le conduit (160, 164) est muni d'un registre (162, 166) pour régler le débit à travers le conduit (160, 164) ; de préférence le registre (162,166) peut être commandé.
